(19) Europäisches Patentamt
European Patent Office
Office européen des brevets

(11) **EP 1 679 784 B1**

(12) **FASCICULE DE BREVET EUROPEEN**

(45) Date de publication et mention
de la délivrance du brevet:
**27.04.2011 Bulletin 2011/17**

(51) Int Cl.:
*H02M 7/08* (2006.01)　　　*H02M 5/27* (2006.01)

(21) Numéro de dépôt: **06290020.4**

(22) Date de dépôt: **05.01.2006**

(54) **Circuit redresseur triphasé comprenant des redresseurs à 12 impulsions**

Dreiphasen Gleichrichterschaltung mit Zwölfpulsgleichrichtern

Three phase recitifier circuit comprising 12-pulse rectifiers

(84) Etats contractants désignés:
**DE FR GB IT**

(30) Priorité: **07.01.2005 FR 0500184**

(43) Date de publication de la demande:
**12.07.2006 Bulletin 2006/28**

(73) Titulaire: **TECHNOFAN**
**31700 Blagnac (FR)**

(72) Inventeur: **Cester, Christophe**
**31700 Blagnac (FR)**

(74) Mandataire: **Domenego, Bertrand et al**
**Cabinet Lavoix**
**2, place d'Estienne d'Orves**
**75441 Paris Cedex 09 (FR)**

(56) Documents cités:
**FR-A- 2 842 962**

• **BANG SUP LEE ET AL: "An optimized active interphase transformer for auto-connected 12-pulse rectifiers results in clean input power" APPLIED POWER ELECTRONICS CONFERENCE AND EXPOSITION, 1997. APEC '97 CONFERENCE PROCEEDINGS 1997., TWELFTH ANNUAL ATLANTA, GA, USA 23-27 FEB. 1997, NEW YORK, NY, USA,IEEE, US, vol. 2, 23 février 1997 (1997-02-23), pages 666-671, XP010215734 ISBN: 0-7803-3704-2**
• **PATENT ABSTRACTS OF JAPAN vol. 015, no. 161 (E-1060), 23 avril 1991 (1991-04-23) & JP 03 032366 A (SANKEN ELECTRIC CO LTD), 12 février 1991 (1991-02-12)**

## Description

La présente invention concerne un étage de redressement d'un courant triphasé, du type comportant :

- un autotransformateur à flux pulsé à redressement dodécaphasé présentant en sortie six phases formant un réseau d'alimentation hexaphasé ;
- deux redresseurs chacun relié en entrée à trois phases distinctes du réseau d'alimentation hexaphasé et présentant chacun deux bornes de sortie polarisées ;
- deux inductances d'interphase ayant deux bornes d'entrée reliées aux bornes de sortie de même polarité des deux redresseurs et un point milieu de sortie, chaque inductance d'interphase comportant deux enroulements couplés magnétiquement et disposés de façon à ce que les flux créés par les composantes continues des courants traversant ces enroulements s'annulent, deux bornes des enroulements étant connectées ensemble pour former le point milieu de sortie et les deux autres bornes constituant les bornes d'entrée ; et
- un étage de filtration recevant en entrée les points milieux des deux inductances d'interphase.

Dans certaines installations, des charges telles que, par exemple, des moteurs électriques sont alimentées depuis un réseau local d'alimentation électrique.

Tel est le cas, par exemple, dans un avion où l'avion est équipé d'un réseau triphasé interne. Ce réseau est alimenté depuis des alternateurs associés aux réacteurs de l'appareil. La fréquence du courant électrique sur le réseau d'alimentation peut être variable.

Afin d'assurer l'alimentation d'une charge, il est connu de prévoir, entre la charge et le réseau d'alimentation, une interface d'alimentation assurant un redressement de la tension issue du réseau d'alimentation puis un conditionnement du courant électrique pour alimenter de manière satisfaisante la charge connectée.

En particulier, une telle interface comprend avantageusement un étage de redressement intégrant un autotransformateur à redressement polyphasé, et notamment un autotransformateur dodécaphasé.

Une telle interface et un étage de redressement sont décrits par exemple dans le document FR-2 842 962.

L'autotransformateur constitue un filtre permettant de limiter les harmoniques générées sur le réseau d'alimentation par les moyens de redressement. Un tel filtre permet notamment d'éliminer totalement certaines harmoniques du courant absorbé et de réduire les autres harmoniques.

Toutefois, on constate, avec un tel étage de redressement, que, même si les harmoniques sont réduites du fait de la présence de l'autotransformateur, celles-ci restent encore présentes.

L'invention a pour but de proposer un étage de redressement ayant des performances améliorées en matière de réjection harmonique.

A cet effet, l'invention a pour objet un étage de redressement d'un courant triphasé du type précité, caractérisé en ce que les deux inductances d'interphase comportent un noyau commun définissant un circuit magnétique et tous les enroulements des deux inductances d'interphase sont bobinés sur ce noyau commun pour leur couplage magnétique, et en ce que les enroulements de deux inductances d'interphase distinctes sont bobinés et connectés de sorte que la fréquence du flux dans le circuit magnétique soit égale à trois fois la fréquence du réseau électrique alimentant l'étage de redressement.

Suivant des modes particuliers de réalisation les deux inductances d'interphase sont bobinées l'une autour de l'autre suivant le noyau commun, les enroulements d'une même inductance étant entrelacés.

L'invention a également pour objet une interface d'alimentation comprenant un étage de redressement d'un courant triphasé tel que ci-dessus et un étage de conditionnement du signal redressé.

Elle a enfin pour objet un engin de transport comportant un réseau d'alimentation électrique et au moins une charge reliée au réseau d'alimentation électrique au travers d'une interface d'alimentation telle que définie ci-dessus.

L'invention sera mieux comprise à la lecture de la description qui va suivre, donnée uniquement à titre d'exemple, et faite en se référant aux dessins sur lesquels :

- la figure 1 est une vue schématique d'une installation électrique d'un avion incorporant une interface d'alimentation et un étage de redressement d'une charge selon l'invention ;
- la figure 2 est une vue à plus grande échelle des inductances d'interphase de l'étage de redressement de la figure 1 ;
- les figures 3A et 3B sont des représentations graphiques de l'évolution du courant d'une phase du réseau d'alimentation en fonction du temps, sur une période, respectivement dans une installation conforme à l'état de la technique (figure 3A) et dans une installation conforme à l'invention (figure 3B) ; et
- la figure 4 est une vue similaire à celle de la figure 2 pour une variante de réalisation de l'invention.

L'installation 10 représentée est supposée incorporée dans un engin de transport, et notamment dans un avion.

Cette installation comporte un réseau d'alimentation 12, une charge 14 connectée au réseau d'alimentation et une interface 16 interposée entre le réseau d'alimentation 12 et la charge 14, afin d'assurer l'alimentation de cette dernière.

La charge 14 est constituée par exemple d'un moteur électrique triphasé. Le réseau d'alimentation 12 est constitué par exemple d'un réseau d'alimentation triphasé de fréquence variable, la tension nominale étant par exemple égale à 115/200 volts.

L'interface d'alimentation comporte un étage de redressement 18 connecté au réseau d'alimentation 12 et un étage 20 de conditionnement du courant d'alimentation dont la sortie est reliée à la charge 14. L'étage de conditionnement 20 est relié à la sortie de l'étage d'entrée de redressement 18 pour son alimentation.

Plus précisément, l'étage 20 de conditionnement du courant est constitué dans l'exemple considéré d'un onduleur ayant un module de puissance 22 et un module de commande 24.

Le module de puissance 22 est adapté pour recevoir en entrée notée 26 un courant continu et pour fournir en sortie 28 un courant triphasé d'alimentation de la charge 14. Le module de puissance 22 est propre à mettre en forme le courant d'alimentation de la charge 14 à partir d'ordres de pilotage reçus du module de commande 24. A cet effet, ce dernier comporte une unité de traitement d'informations 30 propre à élaborer et à fournir les ordres de pilotage au module de puissance 22.

Le module de commande 24 comporte en outre une unité 32 de mise en forme du courant adaptée pour recevoir en entrée un courant alternatif triphasé basse tension et pour fournir en sortie un courant basse tension propre à l'alimentation de l'unité de traitement d'informations 30. En outre, l'unité de mise en forme du courant 32 est propre à assurer l'alimentation d'organes auxiliaires 34 pilotés ou non depuis l'unité de traitement d'informations 30 du module de commande 24.

L'étage 18 de redressement comporte un autotransformateur à flux pulsé 40 à redressement dodécaphasé.

Un étage de redressement de ce type est décrit dans sa généralité dans l'article "Polyphase Transformer Arrangements with Reduced kVA Capacities for Harmonic Current Reduction in Rectifier-Type Utility Interface" (IEEE Transactions on Power Electronics, vol. 11, N° 5, Septembre 1996, pages 680-690). Ainsi, pour les détails de réalisation, l'homme du métier se rapportera à ce document et seuls les éléments propres à l'invention seront décrits ici en détail.

L'autotransformateur 40 comporte un noyau métallique 42 formant deux boucles magnétiques imbriquées délimitées par trois branches 42A, 42B, 42C reliées les unes aux autres par leurs extrémités.

Un enroulement primaire 44A, 44B, 44C, relié à chaque phase du réseau d'alimentation 12, est bobiné sur chaque branche 42A, 42B, 42C. Ces trois enroulements sont connectés en triangle, de sorte que les extrémités de chaque enroulement connecté au réseau d'alimentation 12 sont connectés à l'extrémité de sortie d'un autre enroulement.

En outre, chaque branche 42A, 42B, 42C comporte deux enroulements secondaires 46A, 46B, 46C et 48A, 48B, 48C reliés deux à deux en série. Ces enroulements sont connectés chacun depuis leur point médian à une phase du réseau d'alimentation 12.

Les extrémités de sortie de chaque paire de bobinages secondaires en série constituent les six phases d'un réseau d'alimentation hexaphasé formé en sortie de l'autotransformateur 40.

Les sorties des enroulements secondaires associés trois à trois sont reliées aux entrées de deux ponts de diodes 50A, 50B formant des redresseurs présentant chacun en sortie une borne + et une borne -.

Les sorties de même polarité des ponts de diodes 50A, 50B sont reliées aux deux bornes d'entrée de deux inductances d'interphase 51A, 51 B. Chaque inductance d'interphase comporte deux entrées et une unique sortie. Ainsi, les deux entrées de l'inductance d'interphase 51A sont reliées aux bornes + des deux ponts de diodes 50A, 50B, alors que les deux entrées de l'inductance d'interphase 51B sont reliées aux bornes - des deux ponts de diodes 50A, 50B.

Chaque inductance d'interphase comprend deux enroulements notés 51A1, 51A2 et 51B1 et 51B2 pour les inductances d'interphase 51A, 51 B, respectivement. Tous les enroulements ont le même nombre de spires et la même section. Les enroulements d'une même inductance d'interphase sont couplés magnétiquement l'un avec l'autre, de sorte que les flux produits s'opposent. Ainsi, les deux enroulements sont reliés ensemble depuis une extrémité par un point milieu de l'inductance d'interface pour former une sortie, les deux autres extrémités des enroulements formant les entrées de l'inductance d'interphase.

Selon l'invention, les quatre enroulements des deux inductances d'interphase sont portés par un noyau magnétique commun et sont donc disposés en série sur un même circuit magnétique assurant leur couplage magnétique.

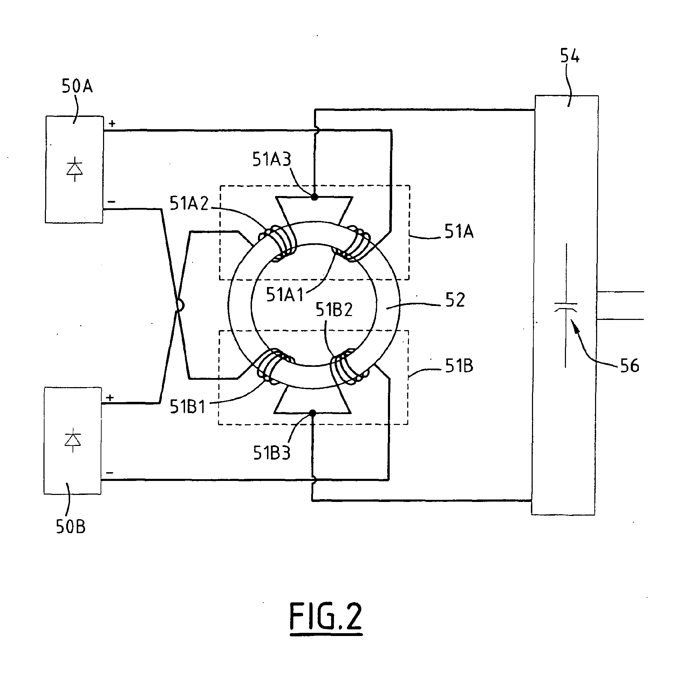

Plus précisément, et comme illustré en détail sur la figure 2, les deux inductances d'interphase comportent un noyau toroïdal commun 52 formé d'un matériau ferromagnétique. Ce noyau a, par exemple, la forme d'un tore de section rectangulaire.

Chaque inductance s'étend sur toute la périphérie du noyau 52, les deux inductances étant bobinées l'une autour de l'autre avec interposition d'un isolant électrique entre les deux.

De plus, les deux enroulements d'une même inductance sont bobinés en étant entrelacés, les deux fils constituant les deux enroulements étant bobinés simultanément et dans le même sens.

Ainsi, les enroulements 51A1 et 51A2 de l'inductance d'interphase 51A sont bobinés dans un même sens sur le noyau 52 et sont reliés l'un à l'autre en série par un point médian 51A3 formant la sortie de l'inductance d'interphase 51A. Les deux autres extrémités des bobinages sont reliées aux bornes + des ponts de diodes 50A, 50B. Les enroulements 51A1 et 51A2 sont disposés de sorte que les flux engendrés par les composantes continues des courants traversant ces enroulements s'opposent.

La structure de l'inductance d'interphase 51B est identique à celle de l'inductance d'interphase 51A. Elle est disposée au-dessus de cette dernière sur le tore 52 et présente aussi un point milieu 51B3 formé à la liaison entre les deux enroulements 51B1 et 51 B2, les extrémités des deux enroulements étant reliées aux sorties - des deux ponts de diodes 50A, 50B.

Les enroulements 51A1, 51B1, d'une part, et 51A2, 51B2, d'autre part, des deux inductances d'interphase sont disposés et connectés sur le noyau 52 de façon à ce que la fréquence du flux dans le circuit magnétique soit égale à trois fois la fréquence d'alimentation depuis le réseau 12. A cet effet, et comme indiqué sur la figure 2, les enroulements des deux inductances d'interphase sont bobinés dans un même sens.

Les sorties 51A3 et 51B3 deux inductances d'interphase 51A, 51B sont connectées à l'entrée d'un étage de filtration 54 intégrant un condensateur 56 de stockage d'énergie.

L'entrée 26 du module de puissance 22 est reliée à la sortie de l'étage de filtration 54 pour l'alimentation en courant continu du module de puissance.

En outre, le module de commande 24 de l'étage 20 de conditionnement du courant est alimenté en courant basse tension depuis un groupe d'enroulements supplémentaires bobinés autour des branches 42A, 42B, 42C de l'autotransformateur.

Plus précisément, l'autotransformateur 40 présente, sur chacune de ses branches 42A, 42B, 42C, trois enroulements 62A, 62B, 62C connectés ensemble en étoile depuis une première extrémité commune, l'autre extrémité de chaque enroulement étant reliée à l'unité 32 de mise en forme du courant du module de commande 24. Ces enroulements ont tous le même nombre de spires.

En outre, trois autres bobinages supplémentaires 64A, 64B, 64C sont bobinés autour des branches 42A, 42B, 42C. Ceux-ci ont chacun un nombre de spires égal différent du nombre de spires des enroulements 62A, 62B, 62C. Ces enroulements sont également reliés en étoile et connectés au module 32.

Lors de l'alimentation de l'autotransformateur 40 depuis le réseau d'alimentation 12, une partie de la puissance issue du réseau est convertie en courant continu et transmise au module de puissance 22 pour être mise en forme en vue de l'alimentation du moteur 14.

En outre, une partie de l'énergie est transmise aux enroulements 62A, 62B, 62C et 64A, 64B, 64C du fait de leur couplage magnétique avec les enroulements primaires. Le courant triphasé prenant naissance dans ces enroulements est appliqué à l'unité 32 afin d'assurer l'alimentation autonome du module de commande 24.

Ces deux séries de trois enroulements assurent la fourniture de deux tensions alternatives différentes au module de commande 24. Après mise en forme des courants reçus, ces deux courants assurent l'alimentation de l'unité de traitement d'informations 30 du module de commande 24.

En variante, l'alimentation du module de commande 24 de l'étage de conditionnement 20 est assurée par une alimentation extérieure indépendante de l'autotransformateur 40.

On constate que le couplage magnétique des deux inductances d'interphase 51A, 51 B, notamment en formant celles-ci sur un même noyau magnétique commun permet une diminution de certaines harmoniques du courant absorbé à l'entrée de l'étage de redressement 18, améliorant ainsi la performance de l'étage de redressement par réduction du taux de rejection harmonique.

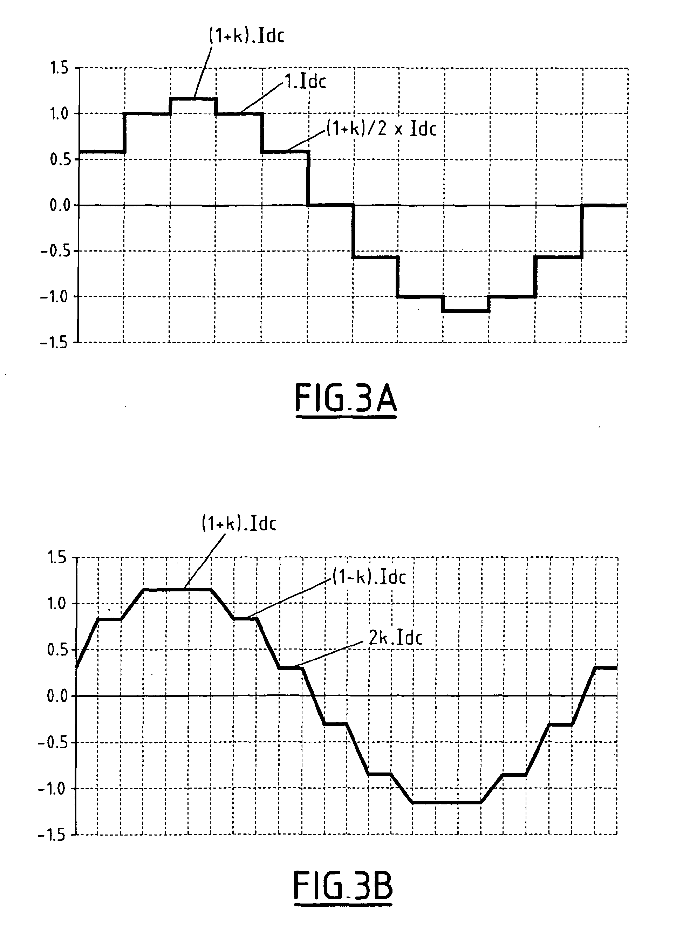

Cet effet ressort clairement de la comparaison des figures 3A et 3B. La figure 3A représente l'évolution en fonction du temps du courant d'une phase du réseau d'alimentation d'un étage de redressement de l'état de la technique. Le graphique couvre une période du courant. Le courant varie par créneau suivant une courbe de forme générale sinusoïdale. Les créneaux sont séparés par des fronts sensiblement verticaux. Le courant maximum vaut environ (1+k).Idc, où k est le rapport de transformation et Idc le courant absorbé par l'étage de conditionnement 20. Le courant au niveau des créneaux immédiatement inférieurs vaut 1.Idc, et, au niveau des créneaux encore inférieurs, vaut (1 + k)/2.Idc .

La forme de la partie de la courbe située en dessous de l'axe des abscisses est symétrique de celle située au-dessus de l'axe des abscisses.

Le rapport de transformation k est défini comme étant le nombre de spires des enroulements secondaires 46A à C ou 48A à C, sur le nombre de spires des enroulements primaires 4A à C.

k vaut par exemple $\dfrac{\tan\left(\dfrac{\pi}{12}\right)}{\sqrt{3}}$

Le courant de la figure 3A présente une distorsion harmonique totale (THD) de 15 % environ. Le THD est défini de la façon suivante :

$$THD = 100 \times \sqrt{\left[\sum_{n=2}^{\infty} H_n^2\right]} / H1$$

où H1 est la valeur efficace de l'harmonique de rang 1 (harmonique fondamentale) et Hn est la valeur efficace de l'harmonique de rang n.

La figure 3B est un graphique similaire à celui de la figure 3A, montrant l'évolution dans le temps du courant d'une phase du réseau d'alimentation d'un étage de redressement selon l'invention. Le courant varie ici aussi par créneaux selon une courbe de forme générale sinusoïdale.

Toutefois, à la différence de la figure 3A, les créneaux sont séparés par des fronts inclinés par rapport à la verticale et les niveaux des paliers de courant sont différents : (1+k).Idc, (1-k).Idc, 2k.Idc et les équivalents négatifs.

Le THD vaut ici 7,8 % soit environ la moitié du THD du courant de la figure 3A.

Ce résultat est atteint à l'aide d'un dispositif de type passif, puisque les inductances d'interphase 51A et 51B ne sont pas pilotées par l'unité de traitement d'informations 30 ou par un autre calculateur.

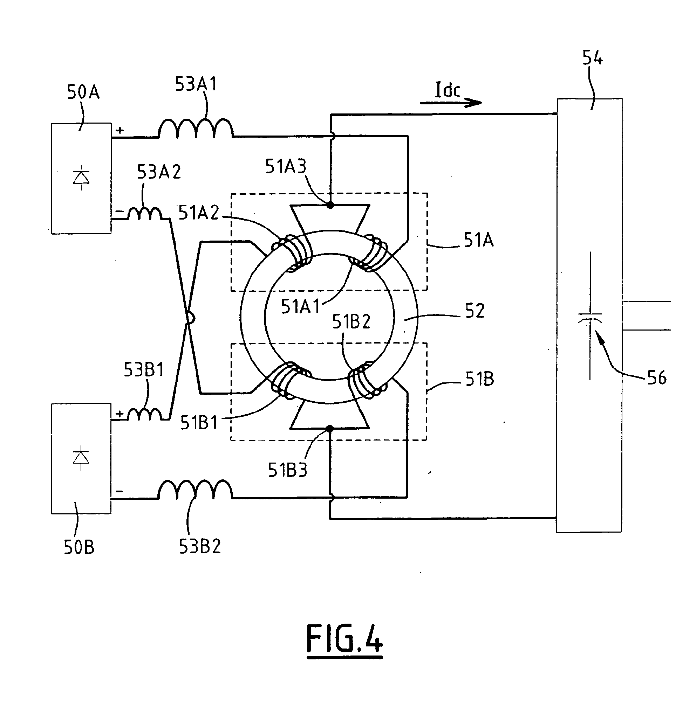

Dans une variante de réalisation représentée sur la figure 4, l'étage de redressement 18 comprend des inductances intermédiaires 53A1, 53A2, 53B1 et 53B2, interposées entre les bornes d'entrée des inducteurs d'interphase 51A et 51 B, et les bornes de sortie des redresseurs 50A et 50B. Ces inductances intermédiaires peuvent être couplées entre elles ou non. Elles peuvent être obtenues en utilisant des composants supplémentaires, ou bien en jouant sur l'impédance de fuite des impédances d'interface 51A et 51B.

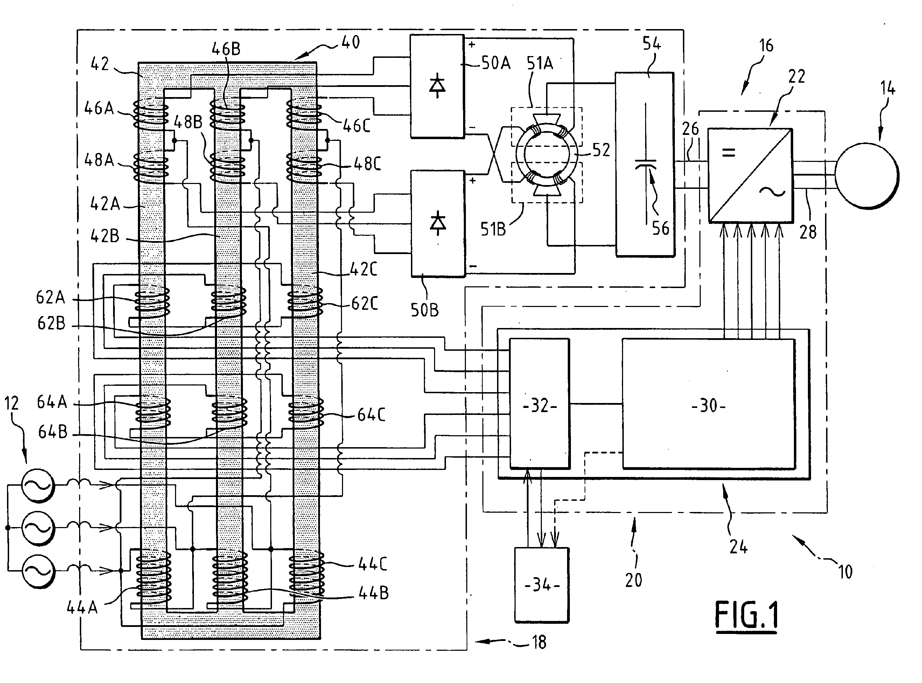

Les impédances intermédiaires permettent de diminuer la valeur efficace du courant dans les différents bobinages du transformateur et des inductances d'interphase par rapport au mode de réalisation représenté sur les figures 1 et 2.

**Revendications**

1. Etage (18) de redressement d'un courant triphasé comportant :

   - un autotransformateur (40) à flux pulsé à redressement dodécaphasé présentant en sortie six phases formant un réseau d'alimentation hexaphasé ;
   - deux redresseurs (50A, 50B) chacun relié en entrée à trois phases distinctes du réseau d'alimentation hexaphasé et présentant chacun deux bornes de sortie polarisées ;
   - deux inductances d'interphase (51A, 51 B) ayant deux bornes d'entrée reliées aux bornes de sortie de même polarité des deux redresseurs (50A, 50B) et un point milieu de sortie (51A3, 51 B3), chaque inductance d'interphase comportant deux enroulements (51A1, 51A2, 51B1, 51B2) couplés magnétiquement et disposés de façon à ce que les flux créés par les composantes continues des courants traversant ces enroulements s'annulent, deux bornes des enroulements étant connectées ensemble pour former le point milieu de sortie et les deux autres bornes constituant les bornes d'entrée ; et
   - un étage de filtration (54) recevant en entrée les points milieux des deux inductances d'interphase (51A, 51 B),

   **caractérisé en ce que** les deux inductances d'interphase (51A, 51 B) comportent un noyau commun (52) définissant un circuit magnétique et tous les enroulements (51A1, 51A2, 51B1, 51B2) des deux inductances d'interphase (51A, 51 B) sont bobinés sur ce noyau commun pour leur couplage magnétique, et **en ce que** les enroulements (51A1, 51A2, 51B1, 51B2) de deux inductances d'interphase distinctes sont bobinés et connectés de sorte que la fréquence du flux dans le circuit magnétique soit égale à trois fois la fréquence du réseau électrique alimentant l'étage de redressement (18).

2. Etage selon la revendication 1, **caractérisé en ce que** les deux inductances d'interphase sont bobinées l'une autour de l'autre suivant le noyau commun (52), les enroulements (51A1, 51A2, 51B1, 51B2) d'une même inductance (51A, 51 B) étant entrelacés.

3. Etage selon la revendication 1 ou 2, **caractérisé en ce qu'**il comprend des inductances intermédiaires (53A1, 53A2, 53B1, 53B2) interposées entre les bornes d'entrée des inductances d'interphase (51A, 51 B) et les bornes de sortie des redresseurs (50A, 50B).

4. Etage selon la revendication 3, **caractérisé en ce que** les inductances intermédiaires (53A1, 53A2, 53B1, 53B2) sont obtenues en utilisant des composants supplémentaires ou en jouant sur l'impédance de fuite des impédances d'interface (51A, 51 B).

5. Interface (10) d'alimentation d'une charge (14) depuis un réseau d'alimentation électrique (12) comportant :

   - un étage (18) de redressement selon l'une quelconque des revendications précédentes ; et
   - un étage (20) de conditionnement du signal d'alimentation présentant une sortie (28) d'alimentation de la charge (14), lequel étage (20) de conditionnement du signal d'alimentation comporte, d'une part, un module de puissance (22) pour le conditionnement du signal d'alimentation relié en sortie de l'étage de redressement (18) et, d'autre part, un module de commande (24) propre à assurer le pilotage du module de puissance (22).

6. Engin de transport comportant un réseau d'alimentation électrique (12) et au moins une charge (14) reliée au réseau d'alimentation électrique (12) au travers d'une interface d'alimentation selon la revendication 5.

**Claims**

1. Stage (18) for rectifying a three-phase current, comprising:

- an autotransformer (40) having pulsed flow for twelve-phase rectification and having, at the output, six phases which form a six-phase power supply network;

- two rectifiers (50A, 50B), each of which is connected at the input to three separate phases of the six-phase power supply network and which each have two polarised output terminals,

- two interphase inductors (51A, 51B) having two input terminals which are connected to the output terminals of the two rectifiers (50A, 50B) having the same polarity and a centre output point (51A3, (51B3), each interphase inductor comprising two windings (51A1, 51A2, 51B1, 51B2) which are coupled magnetically and which are arranged so that the flows created by the continuous components of the currents which pass through these windings compensate for each other, two terminals of the windings being connected to each other in order to form the centre output point and the other two terminals constituting the input terminals; and

- a filtration stage (54) which receives at the input the centre points of the two interphase inductors (51A, 51B), **characterised in that** the two interphase inductors (51A, 51B) comprise a common core (52) which defines a magnetic circuit and all the windings (51A1, 51A2, 51B1, 51B2) of the two interphase inductors (51A, 51B) are wound on this common core for the magnetic coupling thereof, and **in that** the windings (51A1, 51A2, 51B1, 51B2) of two separate interphase inductors are wound and connected so that the frequency of the flow in the magnetic circuit is equal to three times the frequency of the electrical network which supplies the rectification stage (18).

2. Stage according to claim 1, **characterised in that** the two interphase inductors are wound one around the other in accordance with the common core (52), the windings (51A1, 51A2, 51B1, 51B2) of the same inductor (51A, 51B) being interwoven.

3. Stage according to claim 1 or 2, **characterised in that** it comprises intermediate inductors (53A1, 53A2, 53B1, 53B2) which are interposed between the input terminals of the interphase inductors (51A, 51B) and the output terminals of the rectifiers (50A, 50B).

4. Stage according to claim 3, **characterised in that** the intermediate inductors (53A1, 53A2, 53B1, 53B2) are produced using supplementary components or by acting on the stray impedance of the interface inductors (51A, 51B).

5. Interface (10) for supplying a load (14) from an electrical power supply network (12) comprising:

- a rectification stage (18) according to any one of the preceding claims; and

- a stage (20) for processing the supply signal having an output (28) for supplying the load (14), which stage (20) for processing the supply signal comprises firstly a power module (22) for processing the supply signal which is connected at the output of the rectification stage (18) and secondly a control module (24) which can bring about the control of the power module (22).

6. Transport machine comprising an electrical power supply network (12) and at least one load (14) which is connected to the electrical power supply network via a supply interface according to claim 5.

**Patentansprüche**

1. Stufe (18) zum Gleichrichten eines Dreiphasenwechselstroms, aufweisend:

- einen Autotransformator (40) mit gepulstem Fluss mit Zwölfphasen-Gleichrichtung, der an seinem Ausgang sechs Phasen aufweist, die ein Sechsphasen-Versorgungsnetz bilden,

- zwei Gleichrichter (50A, 50B), die am Eingang jeweils mit drei verschiedenen Phasen des Sechsphasen-Versorgungsnetzes verbunden sind und jeweils zwei polarisierte Ausgangsanschlüsse aufweisen,

- zwei Interphasen-Induktivitäten (51A, 51B), die zwei mit den Ausgangsanschlüssen gleicher Polarität der beiden Gleichrichter (50A, 50B) verbundene Eingangsanschlüsse und einen Ausgangsmittelpunkt (51A3, 51B3) aufweisen, wobei jede Interphasen-Induktivität zwei Spulen (51A1, 51A2, 51B1, 51B2) aufweist, die magnetisch gekoppelt und derart angeordnet sind, dass die von den Gleichstromanteilen der die Spulen durchquerenden Ströme erzeugten Flüsse einander aufheben, wobei zwei Anschlüsse der Spulen zum Bilden des Ausgangsmittelpunktes miteinander verbunden sind, und die beiden anderen Anschlüsse die Eingangsanschlüsse bilden, und

- eine Filterstufe (54), die am Eingang die Mittelpunkte der beiden Interphasen-Induktivitäten (51A, 51B) empfängt,

**dadurch gekennzeichnet, dass** die beiden Interphasen-Induktivitäten (51A, 51B) einen gemeinsamen Kern (52) aufweisen, der einen Magnetkreis definiert, und alle Spulen (51A1, 51A2, 51B1, 51B2) der beiden Interphasen-Induktivitäten (51A, 51B) für ihre magnetische Kopplung auf den gemeinsamen Kern gewickelt sind, und dass die Spulen (51A1, 51A2, 51B1, 51B2) von zwei verschiedenen Interphasen-Induktivitäten derart gewickelt und gekoppelt sind, dass die Frequenz des Flusses in dem Magnetkreis gleich dem Dreifachen der Frequenz des Stromnetzes ist, das die Gleichrichterstufe (18) speist.

2. Stufe gemäß Anspruch 1, **dadurch gekennzeichnet, dass** die beiden Interphasen-Induktivitäten entlang dem gemeinsamen Kern (52) umeinander gewickelt sind, wobei die Spulen (51A1, 51A2, 51B1, 51B2) einer gleichen Induktivität (51A, 51B) miteinander verflochten sind.

3. Stufe gemäß Anspruch 1 oder 2, **dadurch gekennzeichnet, dass** sie Zwischeninduktivitäten (53A1, 53A2, 53B1, 53B2) aufweist, die zwischen den Eingangsanschlüssen der Interphasen-Induktivitäten (51A, 51B) und den Ausgangsanschlüssen der Gleichrichter (50A, 50B) angeordnet sind.

4. Stufe gemäß Anspruch 3, **dadurch gekennzeichnet, dass** die Zwischeninduktivitäten (53A1, 53A2, 53B1, 53B2) mittels zusätzlicher Komponenten oder durch Setzen auf die Streuimpedanz der Interphasen-Induktivitäten (51A, 51B) erhalten werden.

5. Schnittstelle (10) für zum Versorgen einer Last (14) aus einem Stromversorgungsnetz (12), aufweisend:

    - eine Gleichrichterstufe (18) gemäß einem der vorhergehenden Ansprüche, und
    - eine Stufe (20) zum Aufbereiten des Versorgungssignals, aufweisend einen Ausgang (28) zum Versorgen der Last (14), wobei die Stufe (20) zum Aufbereiten des Versorgungssignals einerseits ein am Ausgang der Gleichrichterstufe (18) angeschlossenes Leistungsmodul (22) zum Aufbereiten des Versorgungssignals und andererseits ein zum Sicherstellen der Steuerung des Leistungsmoduls (22) geeignetes Steuermodul (24) aufweist.

6. Transportmaschine, aufweisend ein Stromversorgungsnetz (12) und mindestens eine Last (14), die über eine Versorgungsschnittstelle gemäß Anspruch 5 mit dem Stromversorgungsnetz (12) verbunden ist.

FIG.1

EP 1 679 784 B1

## FIG.2

## FIG.3A

## FIG.3B

## FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2842962

**Littérature non-brevet citée dans la description**

• Polyphase Transformer Arrangements with Reduced kVA Capacities for Harmonic Current Reduction in Rectifer-Type Utility Interface. *IEEE Transactions on Power Electronics,* Septembre 1996, vol. 11 (5), 680-690